## Europäisches Patentamt
## European Patent Office
## Office européen des brevets

(11) Numéro de publication: **0 296 939**
**B1**

(12) **FASCICULE DE BREVET EUROPEEN**

(45) Date de publication du fascicule du brevet: **16.01.91**

(51) Int. Cl.⁵: **B 60 N 2/46**

(21) Numéro de dépôt: **88401488.7**

(22) Date de dépôt: **15.06.88**

(54) **Accoudoir central avant à deux positions stables d'un véhicule automobile.**

(30) Priorité: **24.06.87 FR 8708881**

(43) Date de publication de la demande:
**28.12.88 Bulletin 88/52**

(45) Mention de la délivrance du brevet:
**16.01.91 Bulletin 91/03**

(84) Etats contractants désignés:
**DE GB IT**

(56) Documents cités:
**EP-A-0 063 969**
**DE-A-2 931 237**
**DE-A-3 036 302**
**DE-A-3 110 515**
**DE-A-3 230 974**
**US-A-4 577 905**

(73) Titulaire: **AUTOMOBILES PEUGEOT**
**75, avenue de la Grande Armée**
**F-75116 Paris (FR)**

(73) Titulaire: **AUTOMOBILES CITROEN**
**62 Boulevard Victor-Hugo**
**F-92200 Neuilly-sur-Seine (FR)**

(72) Inventeur: **Girard, Jean-Christophe**
**2, rue Viette**
**F-25200 Montbeliard (FR)**
Inventeur: **Reuche, Michel**
**Etrappe**
**F-25250 L'Isle sur le Doubs (FR)**
Inventeur: **Erard, Robert**
**9, rue Paul Fleury, Exincourt**
**F-25400 Audincourt (FR)**
Inventeur: **Chery, Francis**
**38, avenue Maréchal Joffre**
**F-25200 Montbeliard (FR)**

(74) Mandataire: **Bouget, Lucien et al**
**Cabinet Lavoix 2, Place d'Estienne d'Orves**
**F-75441 Paris Cédex 09 (FR)**

## Description

L'invention concerne un accoudoir, notamment un accoudoir central avant à deux positions stables d'un véhicule automobile, tel que défini dans le préambule de la revendication 1, et connu par exemple du document US—A—4 577 905.

L'accoudoir central avant d'un véhicule automobile qui est disposé entre les deux sièges avant comporte une partie mobile d'appui constituée par une armature recouverte par une matelassure. Cette partie mobile est montée articulée sur le véhicule automobile, autour d'un axe horizontal, de façon à pouvoir se déplacer entre deux positions, à savoir une position abaissée où cette partie mobile d'appui est sensiblement horizontale et une position relevée où elle est sensiblement verticale. Dans sa position abaissée, l'accoudoir joue son rôle habituel, la mise en position relevée de l'accoudoir pouvant s'avérer nécessaire, pour pouvoir accéder à une zone située sous l'accoudoir réservée à divers usages. On peut par exemple disposer sous l'accoudoir une boîte ou case pour le rangement de divers objets pouvant servir au conducteur ou aux passagers du véhicule. On peut également disposer sous l'accoudoir une console comportant des moyens de commande de divers organes du véhicule.

Dans le cas d'un accoudoir fixe restant constamment en position sensiblement horizontale, il n'est pas possible de définir des dimensions idéales pour cet accoudoir qui permettent à la fois d'obtenir une bonne accessibilité à la zone située sous l'accoudoir et un confort satisfaisant pour le passager avant du véhicule. De plus, l'accoudoir en position fixe ne constitue pas une barrière efficace entre l'arrière et l'avant du véhicule, dans l'espace ménagé entre les deux sièges avant.

Il peut être en effet nécessaire de constituer une telle barrière entre l'arrière et l'avant du véhicule, par exemple pour empêcher le passage d'un enfant ou d'un animal de l'arrière vers l'avant du véhicule. Une telle barrière peut également éviter qu'un enfant assis sur le siège arrière du véhicule ne soit projeté à l'avant du véhicule, en cas de freinage brutal.

On a donc proposé de prévoir un moyen de verrouillage de l'accoudoir central avant en position relevée, pour que cet accoudoir puisse constituer alors une barrière efficace entre l'arrière et l'avant du véhicule.

On a proposé de réaliser le verrouillage et le déverrouillage de l'accoudoir par des moyens disposés latéralement par rapport à l'accoudoir. Cependant, de tels moyens sont peu pratiques et encombrants.

On a également proposé de fixer l'accoudoir sur le siège avant plutôt que sur le plancher du véhicule. Un tel accoudoir peut s'avérer inutilisable en position abaissée, lorsque le siège avant sur lequel il est fixé est en position avancée. En effet, l'accessibilité des commandes situées entre les deux sièges avant peut alors devenir très réduite sinon nulle.

Dans le US—A—4,577,905, on décrit un accoudoir de véhicule automobile monté pivotant sur une chape fixée sur la carrosserie du véhicule et comportant deux montants sensiblement verticaux dont l'un comporte sur son bord supérieur des encoches de blocage de l'accoudoir en position horizontale et en position verticale, respectivement.

L'accoudoir comporte une ferrure dans laquelle est monté un axe de blocage parallèle à l'axe de pivotement de manière à être mobile à l'une de ses extrémités dans une fente traversant un montant de la ferrure destiné à venir dans une position adjacente au montant de la chape comportant des encoches. Le rappel élastique de l'extrémité de l'axe de blocage assure son introduction dans les encoches. Le blocage est donc réalisé de manière dissymétrique dans un seul montant latéral et le dispositif met en oeuvre une déformation de l'axe. Son fonctionnement n'est donc pas extrêmement sûr.

On connaît par le DE—A—2,931,237 un accoudoir pivotant dont le guidage entre ses positions relevée et abaissée est assuré par une roulette en matériau souple se déplaçant sur une surface de guidage rigide. Un tel dispositif ne peut assurer un blocage efficace de l'accoudoir, en particulier dans sa position relevée, de manière que cet accoudoir constitue une barrière entre l'arrière et l'avant du véhicule.

Le but de l'invention est donc de proposer un accoudoir, notamment un accoudoir central avant d'un véhicule automobile comportant une partie mobile d'appui constituée par une armature recouverte par une matelassure, montée articulée autour d'un axe horizontal de façon à pouvoir être déplacée entre deux positions stables, à savoir une position abaissée où cette partie mobile d'appui est sensiblement horizontale et une position relevée où elle est sensiblement verticale et une chape fixée sur la carrosserie du véhicule sur laquelle est articulée la partie mobile, comportant deux montants verticaux disposés latéralement par rapport à la partie mobile, l'un au moins des montants ayant un bord supérieur comportant une encoche, cet accoudoir ayant une structure simple et peu encombrante et pouvant être déplacé entre ses positions abaissée et relevée de façon simple et rapide, avec un verrouillage automatique dans sa position relevée où l'accoudoir assure de façon efficace un rôle de barrière entre l'arrière et l'avant du véhicule.

Dans ce but, l'accoudoir suivant l'invention comporte de plus:

un axe de verrouillage parallèle à l'axe d'articulation monté sur la partie mobile avec une certaine latitude de déplacement dans la direction de la perpendiculaire commune à l'axe d'articulation et à l'axe de verrouillage et maintenu en contact par ses parties d'extrémité latérales, avec le bord supérieur des montants de la chape, par un moyen de rappel de l'axe de verrouillage en direction de l'axe d'articulation, lors des déplacements en rotation de la partie mobile, lesbords supérieurs des montants de la chape ayant une forme identique et comportant chacun une encoche dirigée vers l'axe d'articulation de la partie mobile dans une position telle que les extrémités latérales de l'axe de verrouillage puissent pénétrer, sous l'effet du moyen de rappel, chacune dans une encoche correspondante, pour réaliser le blocage de la partie mobile dans sa position relevée.

Afin de bien faire comprendre l'invention, on va maintenant décrire, à titre d'exemple non limitatif, en se référant aux figures jointes en annexe, un mode de réalisation d'un accoudoir suivant l'invention.

La figure 1 est une vue en élévation latérale avec coupe partielle d'un accoudoir suivant l'invention.

La figure 2 est une vue de dessus avec coupe partielle suivant 2—2 de la figure 1.

La figure 3 est une vue latérale en élévation et en coupe de l'extrémité arrière de la partie mobile de l'accoudoir suivant l'invention.

La figure 4 est une vue latérale de la chape de l'accoudoir suivant l'invention.

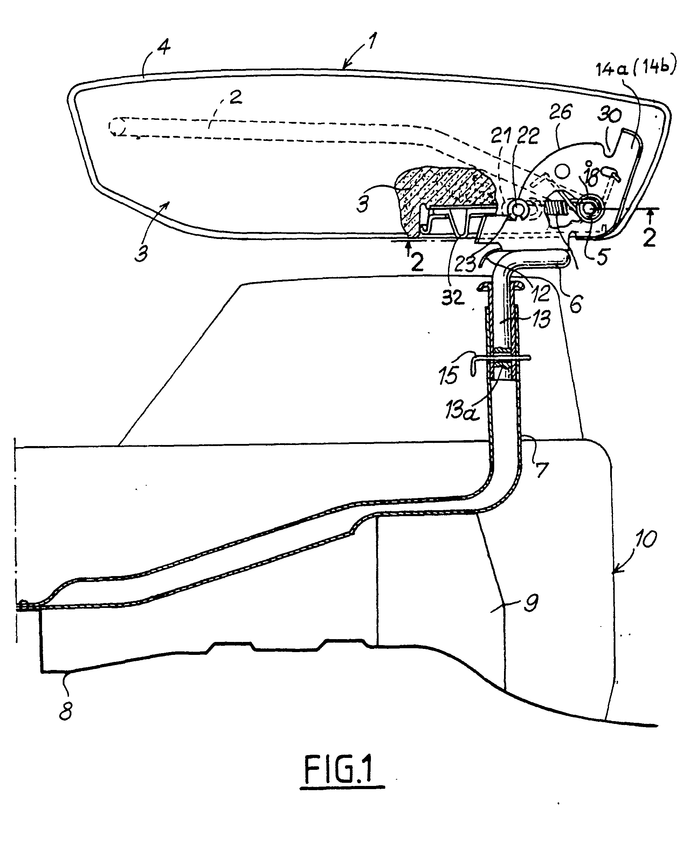

Sur la figure 1, on voit la partie mobile d'appui 1 d'un accoudoir suivant l'invention constituée par une armature 2 noyée dans une matelassure 3 elle-même entourée par une coiffe 4.

La partie mobile d'appui 1 est montée articulée autour d'un axe horizontal 5 sur une chape 6 elle-même fixée de façon rigide sur un support de chape 7 fixé à sa partie avant sur le plancher 8 du véhicule et reposant à sa partie arrière sur le socle 9 d'une console 10 située sous l'accoudoir.

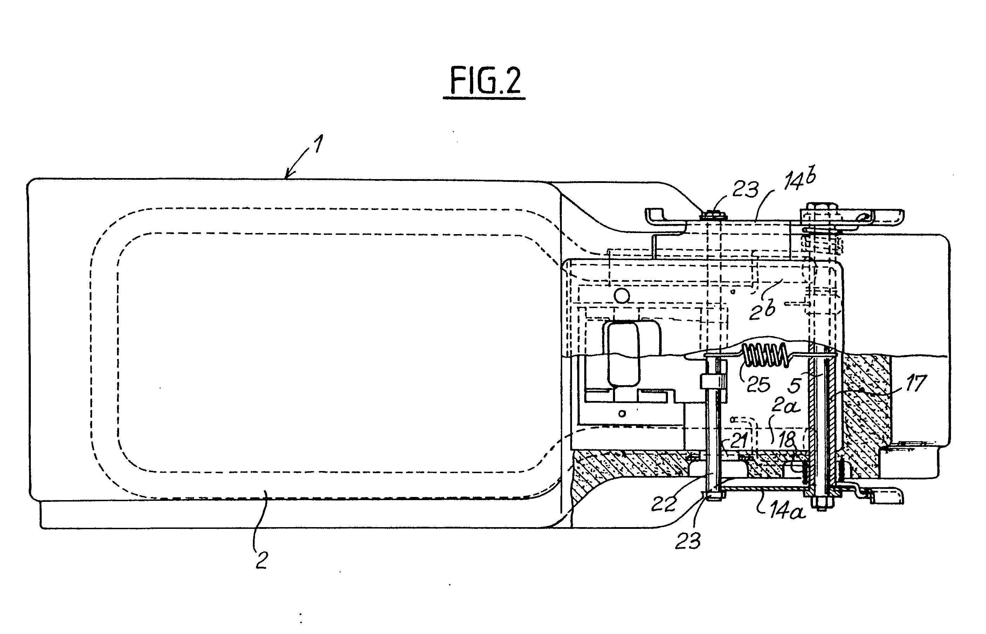

Comme il est visible sur les figures 1 et 2, la chape 6 comporte une base 12 horizontale et de direction transversale par rapport à l'accoudoir dont les côtés latéraux sont relevés à la verticale et constituent deux montants verticaux 14a et 14b entre lesquels est montée la partie mobile 1 de l'accoudoir articulée autour de l'axe 5, de la façon qui sera décrite ci-dessous.

La base 12 de la chape 6 est également solidaire de deux colonnes de fixation telles que la colonne 13 représentée sur la figure 1. Chacune des colonnes 13 vient s'engager, lors du montage de l'accoudoir, dans un logement ménagé à la partie supérieure du support 7 et constitué par un manchon. La colonne 13 comporte un embrèvement 13a qui vient se placer en face d'ouvertures prévues dans le support 7 et le manchon d'engagement de la colonne 13, pour la fixation de l'accoudoir grâce à une goupille ou épingle 15.

L'accoudoir comportant la partie mobile 1 et la chape 6 peut donc être fixé de façon simple et efficace sur un support rigidement solidaire du plancher du véhicule.

L'armature 2 de la partie mobile 1 de l'accoudoir est solidaire, à son extrémité arrière, d'un cylindre 17 monté tourillonnant sur l'axe 5, lui-même fixé à ses extrémités dans les montants verticaux 14a et 14b de la chape 6 respectivement. Un ressort hélicoïdal 18 est disposé autour de la pièce cylindrique 17, à chacune des extrémités de cette pièce 17, de part et d'autre de la partie mobile 1 de l'accoudoir. Chacun des ressorts 18 est fixé à l'une de ses extrémités au montant vertical correspondant (14a ou 14b) et vient en appui par son autre extrémité sur la partie arrière de l'armature 2 de l'accoudoir.

De cette manière, la partie mobile 1 est montée articulée autour de l'axe 5, sur la chape 6, entre les montants verticaux 14a et 14b et rappelée par les ressorts 18, dans sa position abaissée représentée sur la figure 1 où la partie mobile 1 est sensiblement horizontale.

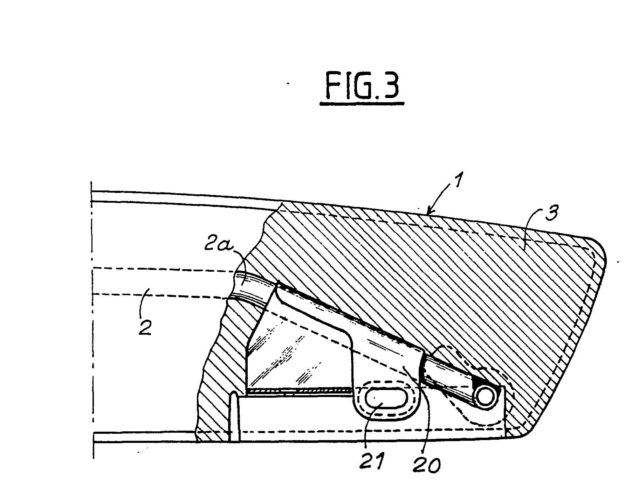

Comme il est visible sur la figure 3, les deux extrémités arrière 2a et 2b de l'armature 2 de l'accoudoir sont solidaires d'une chape 20 comportant deux parois latérales verticales percées chacune d'une ouverture oblongue 21. Les deux ouvertures oblongues 21 sont situées dans l'alignement l'une de l'autre suivant la direction transversale de l'accoudoir parallèle à l'axe 5.

Comme il est visible sur la figure 2, un axe de verrouillage 22 est monté dans la partie mobile 1 de l'accoudoir, parallèlement à l'axe de rotation 5, les extrémités de l'axe de verrouillage 22 étant engagées dans les ouvertures oblongues 21 et maintenues transversalement par des rondelles de blocage ou des écrous 23. L'axe de verrouillage 22 est donc relié à la partie mobile 1 de l'accoudoir de façon à accompagner cette partie mobile lors de ses déplacements entre sa position abaissée et sa position relevée. Cependant, l'axe de verrouillage 22 possède une certaine latitude de déplacement par rapport à la partie mobile 1, dans la direction longitudinale des ouvertures oblongues 21. Ces ouvertures oblongues sont prévues de façon que leur axe longitudinal soit perpendiculaire à l'axe d'articulation 5.

Un ressort hélicoïdal de rappel 25 est disposé dans la direction perpendiculaire commune à l'axe d'articulation 5 et à l'axe de verrouillage 22, les extrémités de ce ressort hélicoïdal étant fixées sur la pièce cylindrique tourillonnante 17 et sur l'axe de verrouillage, 22 respectivement.

L'axe de verrouillage 22 est guidé à ses extrémités par les ouvertures oblongues 21 et rappelé vers l'axe d'articulation 5 par le ressort 25 dans la direction perpendiculaire commune à ces deux axes. L'axe de verrouillage reste donc constamment parallèle à l'axe d'articulation 5 et peut se déplacer dans la direction perpendiculaire commune à l'axe 5 et à l'axe 22, à l'intérieur des ouvertures 21.

De plus, la longueur de l'axe de verrouillage 22 est telle que ses extrémités viennent à l'aplomb des bords supérieurs 26 de chacun des montants verticaux 14a et 14b de la chape 6, les rondelles de blocage 23 étant disposées de part et d'autre et vers l'extérieur par rapport aux montants 14a et 14b.

Le ressort de rappel 25 a une longueur et une tension telles qu'il maintienne constamment les extrémités de l'axe de verrouillage 22 en contact avec le bord supérieur 26 de chacun des montants verticaux 14a et 14b.

Les montants 14a et 14b présentent la même forme et en particulier leurs bords supérieurs 26 sont identiques.

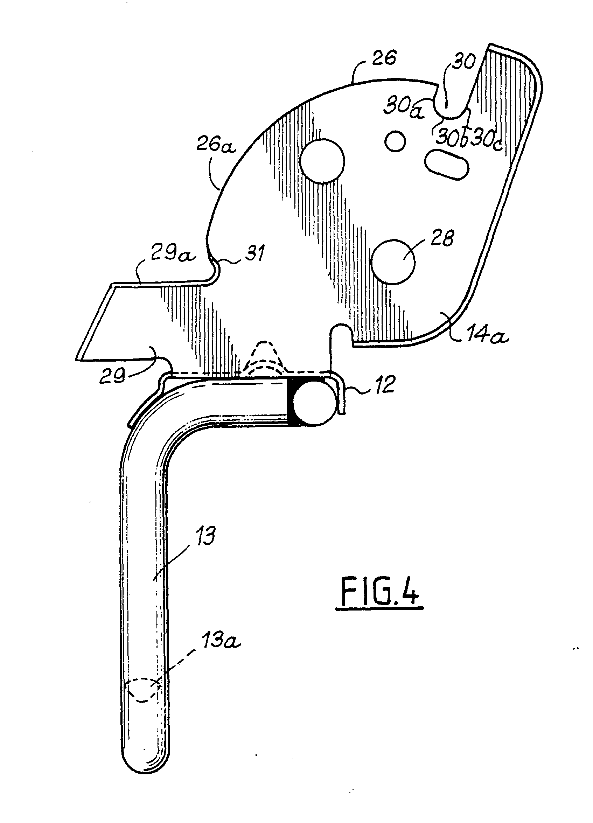

Sur la figure 4, on a représenté à plus grande échelle le montant vertical 14a.

33333

Le bord supérieur 26 de ce montant vertical a globalement la forme d'un arc-de-cercle sensiblement concentrique à l'ouverture 28 ménagée dans le montant 14a pour le passage de l'axe d'articulation 5.

Cependant, de part et d'autre de la partie en forme d'arc-de-cercle du bord 26, le montant 14a présente d'une part une excroissance 29 ayant un bord supérieur 29a horizontal et d'autre part une encoche 30 dirigée radialement vers le centre de l'ouverture 28 c'est-à-dire vers l'axe d'articulation 5.

Le bord supérieur 29a de l'excroissance 29 sert de butée pour l'accoudoir en position abaissée, l'axe de verrouillage 22 étant en appui dans cette position de l'accoudoir sur le bord 29a.

Entre le bord d'appui 29a et le bord 26 en arc-de-cercle, le montant 14a comporte une partie 31 inclinée dont la distance à l'axe d'articulation 5 augmente de bas en haut. Cette partie 31 empêche l'accoudoir en position abaissée de se soulever, ce soulèvement entraînant un déplacement de l'axe 22 le long du bord 31, c'est-à-dire une augmentation de la tension du ressort 25. On stabilise ainsi l'accoudoir ete l'on évite des vibrations et des bruits dans le véhicule en fonctionnement.

La partie 26 du bord supérieur du montant 14a présente une forme globalement en arc-de-cercle. Cependant, la partie inférieure 26a de ce bord 26 présente une forme méplate inclinée dont la distance à l'axe d'articulation 5 augmente de haut en bas. Cette partie 26a du bord 26 permet de freiner le mouvement de la partie mobile 1 de l'accoudoir, lorsque cet accoudoir revient à sa position abaissée, l'axe de verrouillage 22 s'éloignant de l'axe d'articulation 5 sur la partie méplate 26a du bord 26, dans le sens de la descente. Il en résulte une tension du ressort 25 entraînant un freinage de l'accoudoir avant qu'il n'arrive en position abaissée.

L'encoche 30 située à la partie supérieure du montant 14a, à l'une des extrémités du bord circulaire 26, est délimitée par un premier rebord 30a de direction pratiquement radiale, un second rebord 30c sensiblement parallèle au précédent et un fond d'encoche 30b situé à une certaine distance de l'axe d'articulation 5.

Lorsque l'accoudoir est en position relevée, l'axe de verrouillage 22 pénètre dans l'encoche 30, sous l'effet du ressort de rappel 25. Le rebord 30a assure alors le verrouillage de l'accoudoir en position relevée. Le rebord 30c qui est prolongé radialement vers l'extérieur par rapport au rebord 30a sert de butée de fin de course pour l'axe de verrouillage 22, lorsqu'on relève l'accoudoir jusqu'à sa position verticale.

Enfin, le fond d'encoche 30b sert de butée d'appui pour l'axe de verrouillage 22 qui est rappelé vers l'axe d'articulation 5, par l'intermédiaire du ressort 25.

De cette manière, l'accoudoir est parfaitement stable dans sa position relevée.

Comme il est visible sur les figures 1 et 2, l'axe de verrouillage 22 est solidaire d'une palette de déverrouillage 32 accessible sur la surface inférieure de la partie mobile 1 de l'accoudoir et présentant une dépression dans laquelle un utilisateur peut introduire les doigts pour exercer une traction sur la palette 32 et l'axe de verrouillage 22, lorsque l'accoudoir est en position relevée. Cette traction vers le haut sur la palette 32 et l'axe 22 permet de faire sortir l'axe de verrouillage 22 de l'encoche 30, à l'encontre du ressort de rappel 25.

L'axe de verrouillage 22 n'étant plus bloqué par le rebord 30a, les ressorts de rappel 18 peuvent entraîner la partie mobile 1 de l'accoudoir en rotation, jusqu'à sa position abaissée où l'accoudoir vient en appui sur le rebord 29a. A la fin de son mouvement de descente, comme expliqué plus haut, l'accoudoir est freiné par la partie méplate 26a du rebord 26.

L'utilisation de l'accoudoir est très simple, puisqu'on peut faire passer cet accoudoir très facilement de sa position abaissée à sa position relevée en le soulevant jusqu'au moment où la partie mobile est en position pratiquement verticale.

Pendant tout le mouvement de relevage de l'accoudoir, l'axe de verrouillage 22 est maintenu en contact avec le bord supérieur des montants verticaux 14a et 14b, par l'action du ressort de rappel 25.

Au début du mouvement de relevage de l'accoudoir, il est nécessaire de vaincre la résistance due à la tension du ressort 25 lors du passage de l'axe de verrouillage 22 sur les parties 31 des bords supérieurs des montants verticaux. Le relevage de l'accoudoir se poursuit avec un effort très faible, l'axe de verrouillage 22 se déplaçant sur les rebords 26 de forme pratiquement circulaire, la tension du ressort 25 restant constante.

Lorsque l'accoudoir parvient dans une position pratiquement verticale, l'axe de verrouillage 22 vient buter sur le rebord 30c et le ressort de rappel 25 entraîne l'axe de verrouillage 22 dans les encoches 30 jusqu'au moment où l'axe de verrouillage vient s'appuyer sur le fond 30b des encoches. Le ressort 25 possède encore une tension suffisante pour maintenir l'axe de verrouillage en fond d'encoche. Le rebord 30a rend impossible tout mouvement de rabattement de l'accoudoir vers l'avant et vers le bas. L'accoudoir peut alors constituer une barrière entre l'arrière et l'avant du véhicule qui peut être utilisée, par exemple, pour empêcher le passage d'un enfant ou d'un animal vers la partie avant.

Les commandes des organes du véhicule situées sur la console 10 ou des volumes de rangement éventuels associés à cette console sont accessibles sur la totalité de la surface supérieure de cette console 10.

Pour mettre l'accoudoir dans sa position abaissée, il suffit d'exercer une traction vers le haut sur la palette 32 qui entraîne alors l'axe 22 en dehors des encoches 30, ce qui permet à l'accoudoir de revenir en position abaissée où l'axe de verrouillage 22 est en appui sur le rebord 29a.

L'accoudoir possède donc deux positions de service parfaitement stables entre lesquelles il est très facile de le déplacer.

On notera que les positions abaissée et relevée peuvent être assez éloignées des positions horizontale et verticale, l'écart pouvant aller jusqu'à 25° vers l'arrière du véhicule. Il en est de même des montants 14a, 14b et de la base 12 de la chape 6.

En particulier, pour le déverrouillage de l'accoudoir en position relevée, la palette d'actionnement est parfaitement accessible sur la face inférieure de l'accoudoir qui est alors dirigée vers l'avant.

D'autre part, l'accoudoir est parfaitement fixé sur le plancher du véhicule, si bien qu'il est susceptible de constituer une barrière résistante et rigide.

Le verrouillage de l'accoudoir en position relevée est automatique de même que son rabattement dans sa position abaissée.

L'invention ne se limite pas au mode de réalisation qui a été décrit.

C'est ainsi que les bords supérieurs des montants verticaux de la chape peuvent avoir une forme différente de celle qui a été décrite; Cependant, cette forme doit permettre le déplacement de l'accoudoir sans effort excessif et de façon que le ressort de rappel soit toujours tendu. Ce rebord soit comporter au voisinage de l'une de ses extrémités une encoche pour le verrouillage de l'accoudoir dans sa position relevée.

Il est possible d'utiliser d'autres moyens de déverrouillage qu'une palette solidaire de l'axe de verrouillage, ces moyens devant être facilement accessibles sur la face avant de l'accoudoir. On peut agir directement sur l'axe de verrouillage en tirant celui-ci vers le haut si cet axe de verrouillage est accessible.

On peut également imaginer d'autres modes de fixation de la chape sur le plancher ou sur la console du véhicule.

On peut également imaginer d'autres moyens de rappel que des ressorts pour la partie mobile de l'accoudoir et pour l'axe de verrouillage.

On peut également utiliser un dispositif simplifié ne comportant pas de ressort de rappel de l'accoudoir en position abaissée. Après son déverrouillage, l'accoudoir doit dans ce cas être abaissé manuellement. On peut également imaginer un ressort de rappel de l'accoudoir en position relevée, et non abaissée.

On peut imaginer d'autres modes de montage de l'axe de verrouillage sur la partie mobile de l'accoudoir à partir du moment où ce montage laisse une latitude de déplacement de l'axe de verrouillage dans une direction correspondant à la perpendiculaire commune à l'axe de verrouillage et à l'axe d'articulation.

On peut prévoir plus de deux positions stables de l'accoudoir, en ajoutant une ou plusieurs encoches intermédiaires sur les bords 26 de la chape 6.

L'invention s'applique à l'équipement de tout véhicule automobile mais elle pourrait s'appliquer également à l'équipement d'autres moyens de transport, terrestres, maritimes ou aériens et même, de façon plus générale, à tout siège muni d'un accoudoir.

**Revendications**

1. Accoudoir, notamment accoudoir central avant d'un véhicule automobile comportant une partie mobile d'appui (1) constituée par une armature (2) recouverte par une matelassure (3), montée articulée autour d'un axe horizontal (5) de façon à pouvoir être déplacée entre deux positions stables, à savoir une position abaissée où cette partie mobile d'appui (1) est sensiblement horizontale et une position relevée où elle est sensiblement verticale et une chape (6) fixée sur la carrosserie du véhicule sur laquelle est articulée la partie mobile (1), comportant deux montants sensiblement verticaux (14a, 14b) disposés latéralement par rapport à la partie mobile (1), l'un au moins des montants (14a, 14b) ayant un bord supérieur (26) comportant une encoche (30), caractérisé par le fait qu'il comporte de plus:— un axe de verrouillage (22) sensiblement parallèle à l'axe d'articulation (5) monté sur la partie mobile (1) avec une certaine latitude de déplacement dans la direction de la perpendiculaire commune à l'axe d'articulation (5) et à l'axe de verrouillage (22) et dont les parties d'extrémité latérales sont maintenues en contact avec les bords supérieurs (26) des montants de la chape (6) par un moyen de rappel (25) de l'axe de verrouillage (22) en direction de l'axe d'articulation (5), lors du déplacement en rotation de la partie mobile (1), les bords supérieurs (26) des montants (14a, 14b) de la chape (6) ayant une forme identique et comportant chacun une encoche (30) dirigée vers l'axe d'articulation (5) de la partie mobile (1) dans une position telle que les parties d'extrémité latérales de l'axe de verrouillage (22) puissent pénétrer sous l'effet du moyen de rappel (25) chacune dans une encoche (30) pour réaliser le verrouillage de la partie mobile (1) dans sa position relevée.

2. Accoudoir suivant la revendication 1, caractérisé par le fait que les bords supérieurs (26) des montants sensiblement verticaux (14a, 14b) de la chape (6) ont globalement la forme d'arcs de cercle centrés sur l'axe d'articulation (5).

3. Accoudoir suivant la revendication 2, caractérisé par le fait que les montants sensiblement verticaux (14a) et (14b) comportent, de part et d'autre du bord supérieur (26) en forme d'arc de cercle, une excroissance (29) ayant un bord supérieur (29a) sensiblement horizontal et un rebord (30c) de direction sensiblement radiale par rapport à l'arc de cercle (26) délimitant l'encoche (30) du côté opposé au rebord (26) en forme d'arc de cercle, le bord (29a) horizontal servant de butée à l'axe de verrouillage (22), lorsque la partie mobile (1) de l'accoudoir est en position abaissée et le rebord (30c) servant de butée de fin de course à l'axe de verrouillage (22), lorsque la partie mobile (1) est mise dans sa position relevée.

4. Accoudoir suivant la revendication 3, caractérisé par le fait que l'encoche (30) est délimitée sur son côté opposé au rebord (30c), par un rebord (30a) sensiblement parallèle au rebord (30c) et comporte un fond d'encoché (30b) servant de butée à l'axe de verrouillage (22) lorsque la partie mobile (1) de l'accoudoir est dans sa position relevée.

5. Accoudoir suivant la revendication 3, caractérisé par le fait que les montants sensiblement verticaux (14a, 14b) comportent une partie (31) inclinée dont la distance à l'axe d'articulation (5) augmente de bas en haut, entre le bord horizontal (29a) et le bord en arc de cercle (26).

6. Accoudoir suivant l'une quelconque des revendications 2 à 5, caractérisé par le fait que le bord (26) en forme d'arc de cercle comporte, à sa partie inférieure, une partie méplate (26a) inclinée dont la distance à l'axe d'articulation (5) augmente de haut af bas.

7. Accoudoir suivant l'une quelconque des revendications 1 à 6, caractérisé par le fait que la chape (6) comporte au moins une colonne de fixation (13) comportant un embrèvement (13a) destinée à venir dans un logement ménagé dans un support de chape (7) fixé sur le plancher du véhicule, une goupille ou épingle (15) d'immobilisation de la colonne (13) étant engagée dans le support (7) et l'embrèvement (13a) de la colonne (13).

8. Accoudoir suivant l'une quelconque des revendications 1 à 7, caractérisé par le fait qu'il comporte des ressorts (18) de rappel de la partie mobile (1) en position abaissée.

9. Accoudoir suivant l'une quelconque des revendications 1 à 8, caractérisé par le fait que l'axe de verrouillage (22) est monté, par ses extrémités, dans des ouvertures oblongues (21) ménagées dans une chape (20) solidaire de l'armature (2) de la partie mobile (1) de l'accoudoir.

10. Accoudoir suivant l'une quelconque des revendications 1 à 9, caractérisé par le fait que l'axe de verrouillage (22) est solidaire d'une palette de déverrouillage (32) accessible depuis la face supérieure de la partie mobile (1) de l'accoudoir dirigée vers l'avant, lorsque cette partie mobile est en position relevée.

## Patentansprüche

1. Armlehne, insbesondere vordere Mittelarmlehne eines Kraftfahrzeugs, mit einem beweglichen Stützteil (1), der aus einem mit einer Polsterung (3) bedeckten Träger (2) besteht und um eine horizontale Achse (5) schwenkbar montiert ist, so daß er zwischen zwei stabilen Stellungen bewegbar ist, und zwar einer gesenkten Stellung, in der der bewegliche Stützteil (1) im wesentlichen horizontal ist, und einer angehobenen Stellung, in der er im wesentlichen vertikal ist, und einer an der Fahrzeugkarosserie befestigten Gelenkgabel (6), an der der bewegliche Teil (1) angelenkt ist und die zwei im wesentlichen vertikale Wangen (14a, 14b) besitzt, die bezüglich des beweglichen Teils (1) seitlich angeordnet sind und von denen mindestens eine einen oberen Rand (26) mit einer Rastkerbe (30) besitzt, gekennzeichnet durch eine zur Gelenkachse (5) im wesentlichen parallele Verriegelungsachse (22), die an dem beweglichen Teil (1) mit einer gewissen Bewegungsbreite in Richtung der der Gelenkachse (5) und der Verriegelungsachse (22) gemeinsamen Senkrechten montiert ist und deren seitliche Endteile bei der Drehung des beweglichen Teils (1) durch eine Einrichtung (25) zur Rückholung der Verriegelungsachse (22) in Richtung auf die Gelenkachse (5) mit den oberen Rändern (26) der Wangen der Gelenkgabel (6) in Kontakt gehalten werden, wobei die oberen Ränder (26) der Wangen (14a, 14b) der Gelenkgabel (6) eine identische Form besitzen und jeweils eine auf die Gelenkachse (5) des beweglichen Teils (1) zu gerichtete und so angeordnete Rastkerbe (30) aufweisen, daß die seitlichen Endteile der Verriegelungsachse (22) unter der Einwirkung der Rückholeinrichtung (25) jeweils in eine Rastkerbe (30) eintreten können, um den beweglichen Teil (1) in seiner angehobenen Stellung zu verriegeln.

2. Armlehne nach Anspruch 1, dadurch gekennzeichnet, daß die oberen Ränder (26) der im wesentlichen vertikalen Wangen (14a, 14b) der Gelenkgabel im wesentlichen die Form von auf die Gelenkachse (5) zentrierten Kreisbögen haben.

3. Armlehne nach Anspruch 2, dadurch gekennzeichnet, daß die im wesentlichen vertikalen Wangen (14a) und (14b) zu beiden Seiten des kreisbogenförmigen oberen Randes (26) einen Vorsprung (29) mit einem im wesentlichen horizontalen oberen Rand (29a) und einen zum Kreisbogen (26) im wesentlichen radialen Rand (30c) besitzen, der die Rastkerbe (30) auf der dem kreisbogenförmigen Rand (26) entgegengesetzten Seite abgrenzt, wobei der horizontale Rand (29a) als Anschlag für die Verriegelungsachse (22) dient, wenn der bewegliche Teil (1) der Armlehne in der gesenkten Stellung ist, und der Rand (30c) als Endanschlag für die Verriegelungsachse (22) dient, wenn der bewegliche Teil (1) in seiner angehobenen Stellung ist.

4. Armlehne nach Anspruch 3, dadurch gekennzeichnet, daß die Rastkerbe (30) auf ihrer dem Rand (30c) entgegengesetzten Seite durch einen zum Rand (30c) im wesentlichen parallelen Rand (30c) abgegrenzt ist und einen Kerbenboden (30b) besitzt, der als Anschlag für die Verriegelungsachse (22) dient, wenn der bewegliche Teil (1) der Armlehne in seiner angehobenen Stellung ist.

5. Armlehne nach Anspruch 3, dadurch gekennzeichnet, daß die im wesentlichen vertikalen Wangen (14a, 14b) zwischen dem horizontalen Rand (29a) und dem kreisbogenförmigen Rand (26) einen geneigten Teil (31) aufweisen, dessen Abstand von der Gelenkachse (5) von unten nach oben zunimmt.

6. Armlehne nach einem der Ansprüche 2 bis 5, dadurch gekennzeichnet, daß der kreisbogenförmige Rand (26) in seinem unteren Bereich einen geneigten, abgeflachten Teil (26a) besitzt, dessen Abstand von der Gelenkachse (5) von oben nach unten zunimmt.

7. Armlehne nach einem der Ansprüche 1 bis 6, dadurch gekennzeichnet, daß die Gelenkgabel (6) mindestens eine Befestigungssäule (13) besitzt, die eine Ausnehmung (13a) aufweist und in eine Aussparung eintreten soll, die in einem an dem Fahrzeugboden befestigten Gelenkgabelhalter (7) vorgesehen ist, wobei ein Stift oder Splint (15) zur Blockierung der Säule (13) in den Halter (7) und die Ausnehmung (13a) der Säule (13) eingesteckt ist.

8. Armlehne nach einem der Ansprüche 1 bis 7, dadurch gekennzeichnet, daß sie Federn (18) zur Rückholung des beweglichen Teils (1) in die gesenkte Stellung besitzt.

9. Armlehne nach einem der Ansprüche 1 bis 8, dadurch gekennzeichnet, daß die Verriegelungsachse (22) mit ihren Enden in Langlöchern (21) montiert ist, die in einer an dem Träger (2) des beweglichen Teils (1) der Armlehne befestigten Gabel (20) vorgesehen sind.

10. Armlehne nach einem der Ansprüche 1 bis 9, dadurch gekennzeichnet, daß an der Verriegelungsachse (22) eine Entriegelungsplatte (32) befestigt ist, die von der nach vorne gerichteten Oberseite des beweglichen Teils (1) der Armlehne aus zugänglich ist, wenn der bewegliche Teil in der angehobenen Stellung ist.

**Claims**

1. Armrest, particularly a front central armrest for a car, comprising a movable support part (1) constituted by a frame (2) covered by a padding (3), mounted so as to articulate about a pivot pin (5), in such a way that it can be displaced between two stable positions, namely a lowered position where said movable support part (1) is substantially horizontal and a raised position where it is substantially vertical and a yoke (6) fixed to the body of the vehicle to which is articulated the movable part (1), having two substantially vertical uprights (14a, 14b) disposed laterally with respect to the movable part (1) at least one of the uprights (14a, 14b) having an upper edge (26) with a notch (30), characterized in that it also comprises a locking pin (22) substantially parallel to the pivot pin (5) mounted on the movable part (1) with a certain displacement latitude in the direction of the common perpendicular to the pivot pin (5) and the locking pin (22) and whose lateral end parts are kept in contact with the upper edges (26) of the uprights of the yoke (6) by a means (25) for returning the locking pin (22) in the direction of the pivot pin (5), during the rotation of the movable part (1), the upper edges (26) of the uprights (14a, 14b) of the yoke (6) having an identical shape and in each case having a notch (30) directed towards the pivot pin (5) of the movable part (1) such that each of the lateral end parts of the locking pin (22) can penetrate a notch (30) under the effect of the return means (25), in order to bring about the locking of the movable part (1) in its raised position.

2. Armrest according to claim 1, characterized in that the upper edges (26) of the substantially vertical uprights (14a, 14b) of the yoke (6) have the shape of circular arcs centred on the pivot pin (5).

3. Armrest according to claim 2, characterized in that the substantially vertical uprights (14a, 14b) have on either side of the circular arc-shaped upper edge (26) a protuberance (29) having a substantially horizontal upper edge (29a) and a ledge (30c) directed substantially radially with respect to the circular arc (26) defining the notch (30) on the side opposite to the circular arc-shaped ledge (26), the horizontal edge (29a) serving as an abutment to the locking pin (22), when the movable part (1) of the armrest is in the lowered position and the ledge (30c) serving as an end of travel stop for the locking pin (22), when the movable part (1) is brought into its raised position.

4. Armrest according to claim 3, characterized in that the notch (30) is defined on its side opposite to the ledge (30c), by a ledge (30a) substantially parallel to the ledge (30c) and having a notch bottom (30b) serving as a stop for the locking pin (22) when the movable part (1) of the armrest is in the raised position.

5. Armrest according to claim 3, characterized in that the substantially vertical uprights (14a, 14b) have an inclined portion (31), whose distance from the pivot pin (5) increases from bottom to top, between the horizontal edge (29a) and the circular arc-shaped edge (26).

6. Armrest according to any one of the claims 2 to 5, characterized in that the circular arc-shaped edge (26) has, in its lower part, an inclined flat portion (26a), whose distance from the pivot pin (5) increases from top to bottom.

7. Armrest according to any one of the claims 1 to 6, characterized in that the yoke (6) has at least one fixing column (13) having a cavity (13a) for engaging in a recess located in a yoke support (7) fixed to the vehicle floor, an immobilizing member or pin (15) for the column (13) being engaged in the support (7) and the cavity (13a) of the column (13).

8. Armrest according to any one of the claims 1 to 7, characterized in that it has springs (18) for returning the movable part (1) into the lowered position.

9. Armrest according to any one of claims 1 to 8, characterized in that the locking pin (22) is mounted by its ends in oblong openings (21) formed in a yoke (20) integral with the frame (2) of the movable part (1) of the armrest.

10. Armrest according to any one of the claims 1 to 9, characterized in that the locking pin (22) is integral with an unlocking member (32) accessible from the upper face of the forwardly directed armrest movable part (1), when the latter is in the raised position.

<u>FIG.1</u>

# FIG.2

EP 0 296 939 B1

# FIG.3

FIG.4